# EUROPEAN PATENT APPLICATION

(11) **EP 0 535 537 A2**
(43) Date of publication of application: **07.04.1993**
(21) Application number: 92116385.3
(22) Date of filing: 24.09.1992
(51) Int. Cl.: G06F 12/08

(54) **Computer system with a cache memory**

(30) Priority: 30.09.1991 JP 278598/91; 30.09.1991 JP 278600/91
(71) Applicant: KABUSHIKI KAISHA TOSHIBA, Kawasaki-shi, Kanagawa-ken 210 (JP)
(72) Inventor: Yamaki, Kazunori, c/o Intellectual Property Div., Minato-ku, Tokyo 105 (JP)
(74) Representative: Henkel, Feiler, Hänzel & Partner

(57) **Abstract**

In a computer system equipped with a cache memory (5), when a CPU (1) makes write access to a ROM area (3A, 3B) in main memory (3), a memory controller (4) performs a write protect procedure on the ROM area (3A, 3B). On the other hand, a flush logic circuit (40) delivers a cache flush signal (FS) as an output to a cache controller (6). The cache controller (6) is responsive to the cache flush signal (FS) to clear all valid bits of the cache memory (5) to zero.

## Description

The present invention relates to a portable computer with, for example, a cache memory and to a computer system having a function for preventing a noncoincidence in storage data between a cache memory and a main memory.

Conventionally the high-speed memory access technique has been developed which is employed when a CPU (central processing unit) gains access to a memory and reads corresponding access item data.

In the high-speed technique, a cache memory system has been well known and is operated as will be set out below. That is, when a CPU gains access to a main memory at an address corresponding to an access item, a cache memory controller makes access to a cache memory and, when a hit occurs, reads corresponding address data out of the cache memory and transfers it to CPU.

Since the cache memory constitutes a high-speed buffer memory, CPU can get high-speed item data. The cache memory is usually comprised of a relatively small capacity type static RAM (random access memory) and the main memory is usually comprised of a relatively great capacity type dynamic RAM.

In the case where no access item data is present in cache memory, that is, a miss occurs, the access item data is transferred from the main memory to CPU and to a cache memory controller. The controller stores (copies) the transferred data in cache memory.

The system includes a ROM (read only memory), that is, a memory where data, including a program, is initially set and need not be varied at a later time. CPU gains access to access item data as required. In order to read data from ROM at high speeds, a system is known whereby data stored in ROM is transferred to the main memory. This system is of such a type that CPU gets access to the main memory, instead of ROM, and reads, out of the main memory, access item data which is stored in ROM. The system sets, as a ROM area, a storage area in that main memory where ROM's data has been stored and, by so doing, treats it as a write protect area so that the rewriting of data is inhibited at that ROM area.

When CPU makes access to the ROM area in main memory in the case where the cache memory system is applied to the aforementioned system, it is possible to read high-speed access item data out of the cache memory where a portion of data coming from the ROM area is stored.

In the cache memory system, when CPU executes write access to the main memory, a storage content in the cache memory corresponding to the address of the access item, together with the corresponding data of the main memory, is rewritten, that is, the data in the cache memory is updated in accordance with write access to the main memory. It is, therefore, possible to secure a coincidence between the storage content of the main memory and that of the cache memory. However, there occurs a situation in which it is not possible to maintain a coincidence between the storage content of the main memory and that of the cache memory.

That is, when CPU gets write access to the ROM area in main memory, the ROM area is write-protected and, therefore, the write-update is inhibited. When, however, write access is executed to the main memory, an update is performed on the storage content of the cache memory corresponding to the access item. For this reason, there occurs a noncoincidence between the storage content of the main memory and that of the cache memory.

Further, in the case where an address space accessible by CPU is greater than the address space of the main memory, unavailable upper bit address data are generated from among those address data bits given by CPU. If the cache memory system is applied to the system and, in this case, CPU provides address data as an output, the storage content of the cache memory is erroneously updated by the unavailable upper bit address data in which case there may occur a noncoincidence between the storage content of the main memory and that of the cache memory.

It is accordingly the object of the present invention to provide a computer system equipped with a cache memory which can prevent a noncoincidence from occurring between the storage content of a main memory and that of a cache memory.

In order to achieve the aforementioned object of the present invention a computer system is provided having an arrangement as will be set out below. That is, the computer comprises a main memory having a first data storage area and write-protected second data storage area read/write-accessible by a CPU of the system; a cache memory for storing data involved when CPU makes read access to the main memory and valid bits for indicating that the stored data can be read or updated; a memory control circuit for, when CPU gains write access to the main memory, determining whether or not a coincidence occurs between that access address and a corresponding address in the second data storage area and for, when that coincidence occurs, generating a flush signal which inhibits write access to the second data storage area and invalidates read access to all storage data of the cache memory or invalidates a data update; and a cache memory control circuit for controlling read/write access to the cache memory and for, on the basis of the flush signal generated from the memory control circuit, clearing all the valid bits stored in the cache memory.

This invention can be more fully understood from the following detailed description when taken in conjunction with the accompanying drawings, in which:
Fig. 1 is a block diagram showing a major section of a computer system according to the present invention;
Fig. 2 is a block diagram showing a practical flush logic circuit in the computer system of Fig. 1;
Fig. 3 is a block diagram showing a diagrammatic arrangement of a portable computer to which the present invention is applied;
Figs. 4 to 5 show a flow chart for explaining the operation of the system; and
Figs. 6 to 7 are a block diagrams showing an arrangement of address buses in the system of the present invention.

An embodiment of the present invention will be explained below with reference to the accompanying drawings.

A major portion of a computer system according to the present invention includes a CPU 1, a main memory 3 and a memory controller 4. CPU 1 comprises a body of, for example, an Intel i486TM type microprocessor 2 and includes those elements other than a cache memory 5 and cache controller 6.

The main memory 3 shows a read/write memory comprised of an ordinary dynamic RAM. Further, the main memory 3 shows a system memory having an extended address space with an address space of an extended memory added to its read/write memory.

The memory controller 4 is connected to CPU 1 via a control bus 22 and address bus 23 and, based on a write/read control signal, etc., and address data, gains write/read access to an ordinary read/write area 3C and ROM areas 3A and 3B. The memory controller 4 has a flash logic circuit 40 which delivers a cache flush signal (FS) relating to the subject matter of the present invention.

The microprocessor 2 includes the cache memory 5 and cache controller 6. The cache controller 6 is connected to the address bus 23 and data bus 24 and controls write/read access to the cache memory 5. When CPU 1 gets read access to the main memory 3, the cache controller 6 reads data corresponding to the address data of an access item out of the cache memory 5 and sends it to CPU 1. When, at this time, the data of the access item is not present in the cache memory 5, that is, a miss occurs, the cache controller 6 reads the data of the access item out of the main memory 3 and transfers it to CPU 1 while, at the same time, stores (copies) that data. Upon storing the data which has been read from the main memory 3 into the cache memory 3, the cache controller 6 sets valid bits (VB) of a logic 1 to the cache memory 5. When the valid bit is cleared to zero, the corresponding data in the cache memory 5 is invalidated.

The memory controller 4 transfers, to the cache controller 6, a cache flush signal (FS) which has been output from the flush logic circuit 40. The cache controller 6 is responsive to the signal (FS) to clear those bits which have been set to the cache memory 5 all to zero, invalidating all the data stored in the cache memory 5.

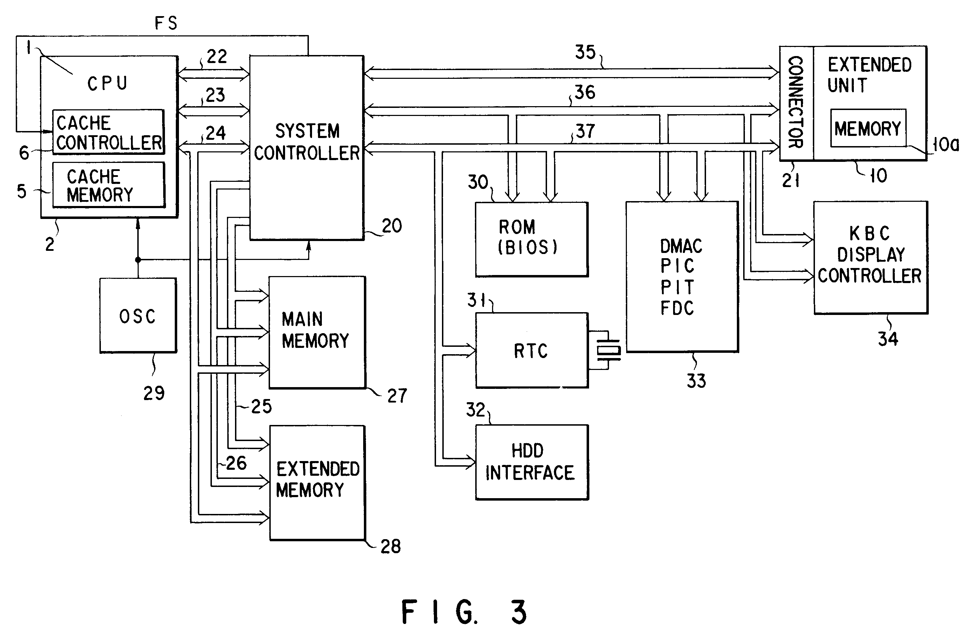

In the computer system of the present invention, data stored in a BIOS-ROM (basic input and output system-read only memory) 30 is transferred to the memory controller 4 by a DMA (direct memory access)-see Fig. 3. The memory controller 4 stores the data (hereinafter referred to as ROM data) which has been transferred into the main memory 3 at a secured ROM area (for example, 32 K-bytes) 3B. Further, the memory controller 4 stores the ROM data which has been transferred from that ROM other than BIOS-ROM 30 into the main memory 3 at a secured ROM area (for example, 32 K-bytes) 3A. The memory controller 4 sets those storage areas, including the ROM area 3A and BIOS-ROM area 3B as write protect areas for inhibiting write access from CPU 1.

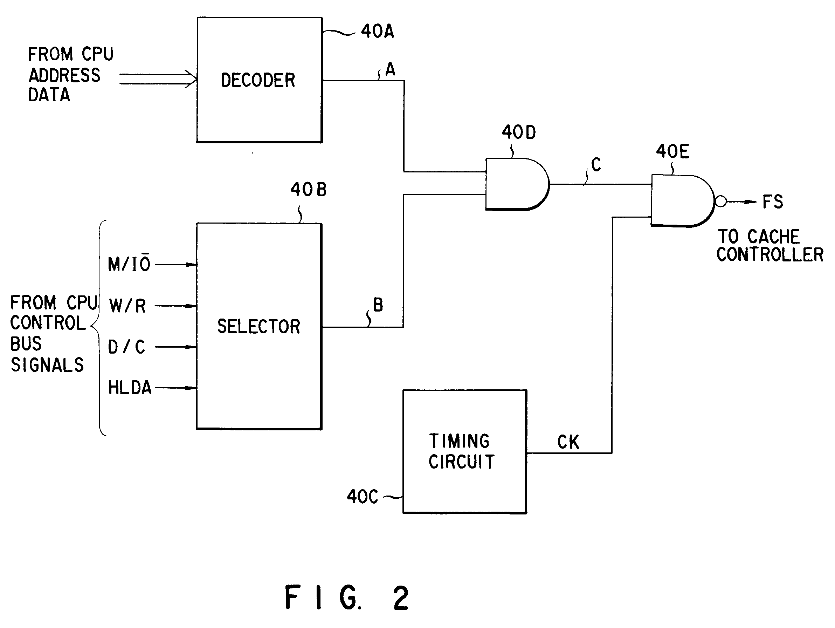

The flush logic circuit 40 comprises, as a practical example, a decoder 40A, a selector 40B, a timing circuit 40C, an AND gate 40D and a NAND gate 40E as shown in Fig. 2. The decoder 40A decodes address data coming from CPU 1 and, when the address data indicates an address corresponding to the write protect area of the main memory 3 including the ROM area 3A and BIOS-ROM area, delivers a logic level "1" significant signal A to a first input terminal of the AND gate 40D. The selector 40B selects a write access instruction signal (logic level "1" W/R signal) from among those control signals output from CPU 1 and delivers it to a second input terminal of the AND gate 40D.

The timing circuit 40C outputs a clock signal CK of a predetermined cycle. Upon receipt of a logic level "1" signal from the AND gate 40D in synchronism with a logic level "1" clock pulse CK coming from the timing circuit 40C, the NAND gate 40E delivers a cache flush signal (FS) as a logic level "0" signal, that is, an inverted replica of the output signal coming from the AND gate 40D.

Fig. 3 is a block diagram showing an arrangement of a portable computer to which the computer system of the present invention is applied. The portable computer generally comprises, for example, an Intel i486TM type 32-bit microprocessor (MPU) 2, a system controller 20 and various units.

The system controller 20 constitutes an LSI comprised of an interface between 32-bit MPU 2 and 16-bit units. The system controller 20 has, in a practical example, various functions of a memory controller 4, a bus controller, an I/O (input/output) controller, etc., as in the present invention.

The system controller 20 is connected to MPU 24 via a control bus 22, 32-bit address bus 23 and 32-bit data bus 24. Further, the system controller 20 is connected to a main memory 27 and extended memory 28 via a memory control bus 25 and memory address bus 26.

The control bus 22 allows transfer of various signals from CPU 1, such as M/IO (memory/input-output), W/R (wright/read), D/C (data/control), HLDA (hold acknowledge) signals, as shown in Fig. 2. The memory control bus 25 allows transfer to those memory control signals from the memory controller 4, such as RAS (row address strobe) and CAS (column address strobe) signals.

The main memory 27 and extended memory 28 correspond to the system memory 3 of the present invention. A clock generator (OSC) 29 supplies a clock pulse to the system controller 20 and MPU 2 for necessary operation to be done thereby.

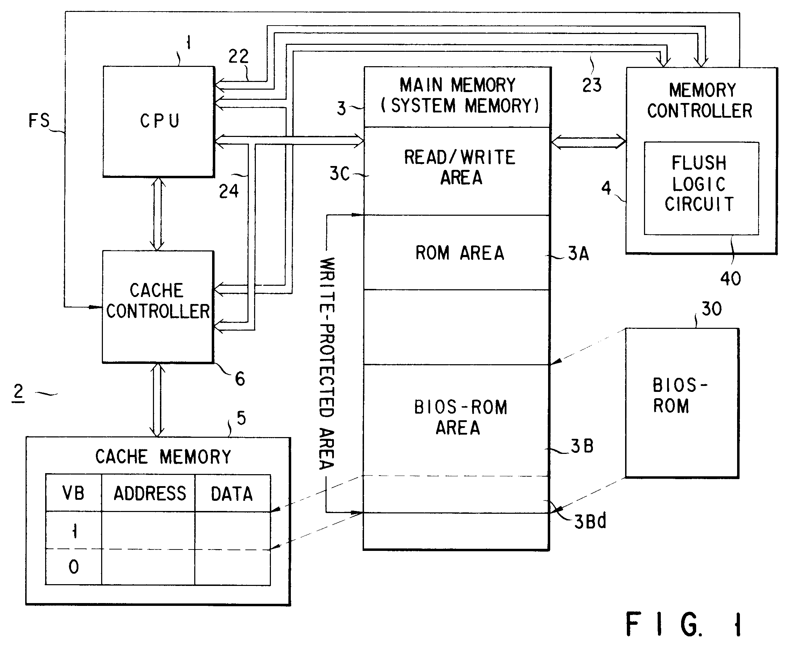

Further provided as various other units are a ROM (read-only memory) 30, RTC (read time controller) 31 and HDD (hard disk drive) interface 32; a unit including a DMAC, PIC, PIT and FDC; and a unit 34 including a KBC, display controller. Here DMAC shows a direct memory access controller; PIC, a programmable interrupt controller; PIT, a programmable interval timer; FDC, a floppy disk controller; and KBC, a keyboard controller. ROM 30 is of such a BIOS-ROM type as shown in Fig. 1 and initially stores BIOS data.

The system controller 20 is connected to those units 30 to 34 via a control bus 35, address bus 36 and data bus 37. Further, the system controller 20 is connected to, for example, an extended unit 10, via a connector 21 dedicated to the unit 10, which includes a memory 10a. The system controller makes an exchange of data, address and various control signals to the extended memory 10a in the extended unit 10 via the control bus 35, address bus 36 and data bus 37.

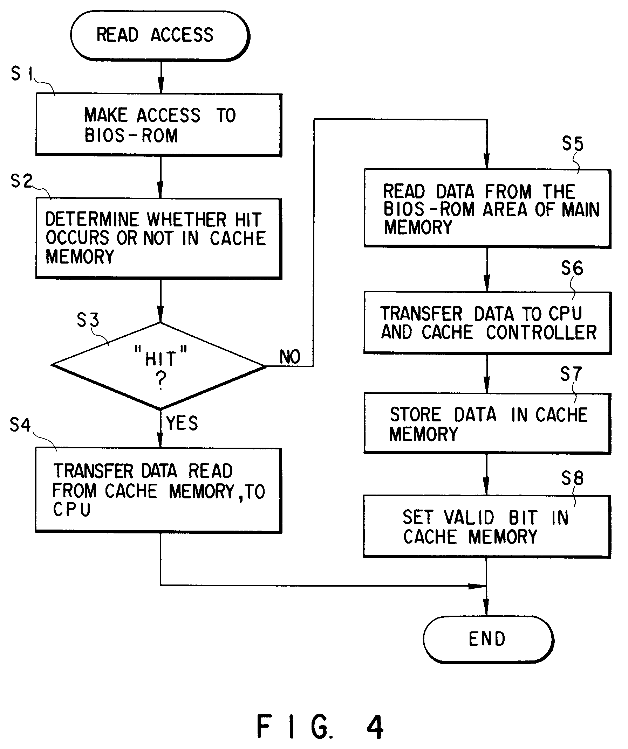

The operation of the present embodiment will be explained below with reference to a flow chart of Figs. 4-5.

At the start of the present system, an initialization routine in BIOS stored in BIOS-ROM 30 is initialized, executing the initialization processing of the system. Further, a BIOS transfer routine in BIOS is started, thus transferring BIOS data itself which is stored in BIOS-ROM 30 to the memory controller 4 in the system controller 20, under DMA control of the DMA controller, through the data bus 37. At that time, the DMA controller designates, by the BIOS transfer routine, BIOS-ROM's header address, transfer destination address and transfer data amount (byte number).

The memory controller 4 supplies those memory control signals, such as a RAS/CAS signal and write enable signal, to the main memory 3 where BIOS data transferred from BIOS-ROM 30 is stored. That is, the transferred BIOS data is stored in main memory 3 at the BIOS-ROM area 3B as shown in Fig. 1.

Let it be assumed that, in the operation of the system as set out above, read access is gained by CPU 1 to BIOS-ROM 30 at step S1 in Fig. 4 to read a portion of BIOS data out of BIOS-ROM 30. At this time, CPU 1 delivers a read instruction (a logic level "0" W/R signal) via the control bus 22 and address data of an access item via an address bus 23.

When CPU 1 gains read access to the main memory 3, the cache controller 6 determines whether or not data corresponding to the address data of the access item is present in the cache memory 5, that is, whether or not a hit occurs at step S2. When a hit occurs at step S3, then the answer is in the affirmative (yes) and the cache controller 6 reads data (here a portion of BIOS data) which is the access item of CPU 1 out of the cache memory 5 and transfers the data to CPU 1 (step S4).

When, on the other hand, the data of the access item is not present in the cache memory 5, that is, a miss occurs (NO in step S3), then the memory controller 4 supplies those memory control signals, such as RAS/CAS and read enable signals, to the main memory 3, reads data 3Bd corresponding to the address of the access item accessed by CPU 1 out of the BIOS-ROM area 3B and transfers it to CPU 1 (step S5). At this time, the memory controller 4 transfers the read data to CPU 1 and to cache controller 6 (step S6).

The cache controller 6 stores (copies) the data of the access item which is transferred into the cache memory 5 (step S7). When, at this time, the cache controller 6 copies the data into the cache memory 5, it sets a valid bit (VB) of a logic level "1" to the cache memory 5 (step S8).

By so doing, CPU 1 can gain read access to BIOS-ROM 30, read a portion of BIOS data out of BIOS-ROM 30 and get access, at high speeds, from the BIOS-ROM area 3B in main memory 3.

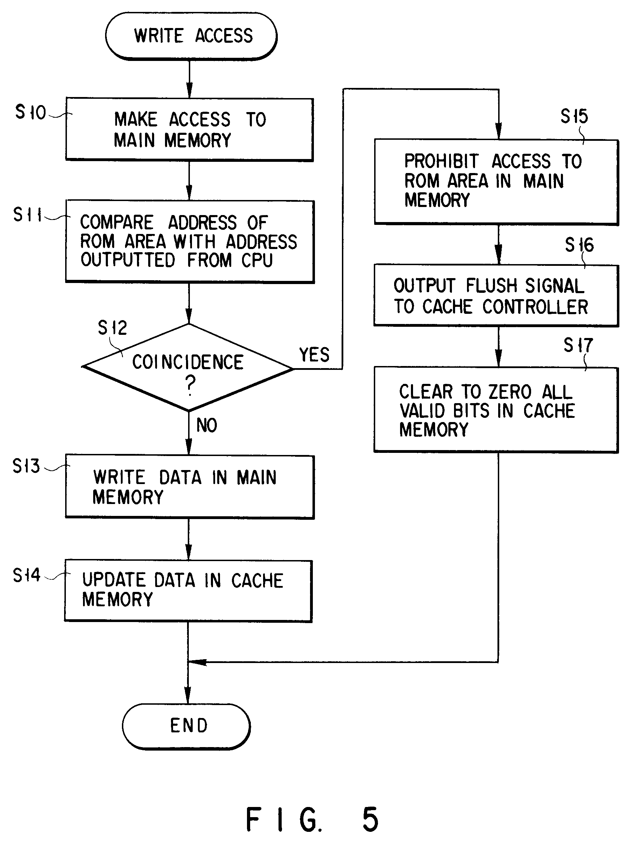

Let it be assumed that, as indicated by step S10 in Fig. 5, CPU 1 makes write access to the main memory 3 and rewrites the data which is stored in main memory 3. At that time, CPU 1 delivers a WRITE instruction (a logic level "1" W/R signal) via the control bus 22 and address data of an access item via the address bus 23.

The memory controller 4 compares an address of the write protect area, including the ROM area 3A and BIOS-ROM area 3B, with the address which is output from CPU 1 - step S11. If a noncoincidence occurs (NO at step S12), the memory controller 4 executes a data rewrite processing (step S13) because CPU 1 designates an area other than the ROM area. That is, the memory controller 4 supplies those memory control signals, such as RAS/CAS and write enable signals, to the main memory 3 and writes the data which is output from CPU 1 into the main memory 3, thus allowing data which is recorded in main memory 3 at the address of an access item to be updated to new data.

On the other hand, the cache controller 6 performs, in accordance with write access made by CPU 1, an update operation on the address data of the cache memory 5 corresponding to the updated data of the main memory 3 (step S14), thus securing a coincidence between the memory content of the main memory 3 and that of the cache memory 5.

When, here, a coincidence occurs upon comparison (YES at step S12) and CPU 1 gets write access to ROM (3A, 3B), the memory controller 4 inhibits write access (step S15) to the ROM area in main memory, practically, stops the outputting of those memory control signals such as RAS/CAS signals so that, even when write access is gained by CPU 1 to the main memory 3, no data update operation is executed at the write protect area of the main memory 3.

As already set out above, the cache controller 6 performs, in accordance with write access by CPU 1, an update operation on the address data of the cache memory 5. That is, when CPU 1 makes access to a stored address corresponding to, for example, data 3Bd of the BIOS-ROM area 3B, the cache controller 6 performs an update processing on the data 3Bd at the address of the cache memory 5. For this reason, there occurs a noncoincidence between the storage content of the main memory 3 and that of the cache memory 5.

According to the present invention, when CPU 1 gains write access to the write protect area of the main memory 3, the memory controller 4 transfers a cache flush signal (FS) to the cache controller 6 (step S16). The cache controller 6 is responsive to the cache flush signal (FS) to clear to zero all those valid bits (BV) which have been set to the cache memory 5 (step S17). This invalidates all those data which have been stored in the cache memory 5.

By so doing, it is possible to prevent the occurrence of a noncoincidence between the storage concept of the main memory 3 and that of the cache memory 5. That is, when CPU 1 makes read access to the BIOS-ROM area 3B at which time all the valid bits of the cache memory 5 have been cleared, the cache controller 6 does not execute the reading of that data corresponding to the address of the address item out of the cache memory 5. Stated in another way, it is possible to prevent transfer, from the cache memory 5 to CPU 1, of data which is different from, for example, the data 3Bd of the BIOS-ROM area 3B corresponding to the access item accessed by the CPU 1.

Here, when CPU 1 makes read access to the BIOS-ROM area 3B, the memory controller 4 reads the data (3Bd) of the access item out of the BIOS-ROM area 3B and transfers the read-out data to CPU 1 and to the cache controller 6. The cache controller 6 copies the transferred data of the access item into the cache memory 5 and sets it as a new valid bit (VB) to the cache memory 5.

In the embodiment, the memory controller 4 has, as shown in Fig. 2, the flush logic circuit 40 for delivering the cache flush signal (FS).

In the flush logic circuit 40, the decoder 40A decodes address data which has been output when CPU 1 gains write access, and produces a logic level "1" significant signal A when the address data indicates an address corresponding to the write protect area including the ROM area 3A and BIOS-ROM area 3B in main memory 3.

On the other hand, the selector 40B selects a write access instruction signal (a logic level "1" W/R signal) from among those control signals output when CPU 1 makes write access and generates a corresponding signal. Upon receipt of a logic level "1" output signal A and logic level "1" W/R signal from the decoder 40A and selector 40B, respectively, the AND gate 40D delivers a logic level "1" signal C. The NAND gate 40E delivers, in synchronism with a logic level "1" clock pulse CK coming from the timing circuit 40C, a logic level "0" cache flush signal (FS), that is, an inverted replica of the logic level "1" output signal coming from the AND gate 40D.

As a practical system of the present invention, a computer system has been conceived with the system controller 20 used as an interface, that is, an interface between a 32-bit CPU side and a 16-bit type external unit side, as shown in Fig. 3.

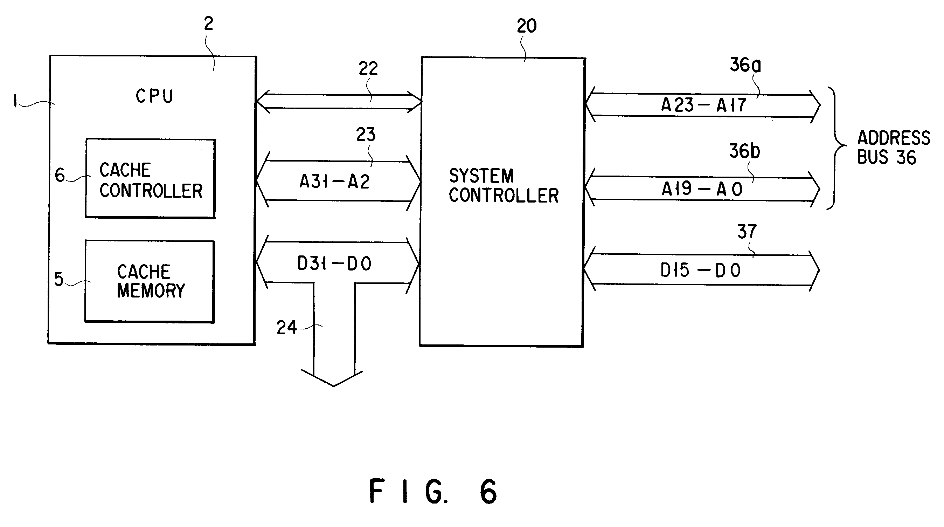

In such a system, CPU 1 is connected to the system controller 20 by a CPU bus of the 32-bit address bus 23 and data bus 24 as shown in Fig. 6. The data bus 24 allows a transfer of 32-bit data D31-DO and the address bus 23, though being a 32-bit type, practically allows a transfer of addresses A31-A2 output from CPU 1, noting that the bus corresponding to the lower addresses A1-A0 is not employed.

On the other hand, the system controller 20 is connected to the external unit side by the system bus of the 16-bit data bus 37 and total-27-bit address bus 36. The data bus 37 allows a transfer of 16-bit data D15-D0. The address bus 36 comprises an upper address bus 36a for transferring address data A23-A17 and a lower address bus 36b for transferring address data A19-A0.

The system controller 20 performs address transfer and data conversion processing between CPU 1 and the 16 bit type external unit and controls data transfer between the two. When, for example, CPU 1 gets access to ROM 30 connected to the system bus, the system controller 20 transfers, via the data bus 37 in two divided portions, data which has been read out of ROM 30. Further, the system controller 20 supplies, via the data bus 24 to CPU 1, 32 bit data which has been read, as the two divided portions, out of ROM 30.

Now let it be assumed that, in such a system, CPU 1 can execute memory access to an address space corresponding to addresses A31-A2 but that the memory capacity of the system memory connected to the system is, for example, 64 bytes and the address space is restricted to that address space accessible with the addresses A26-A2. Here, the system memory comprises the main memory 27 and extended memory 28 as shown in Fig. 3.

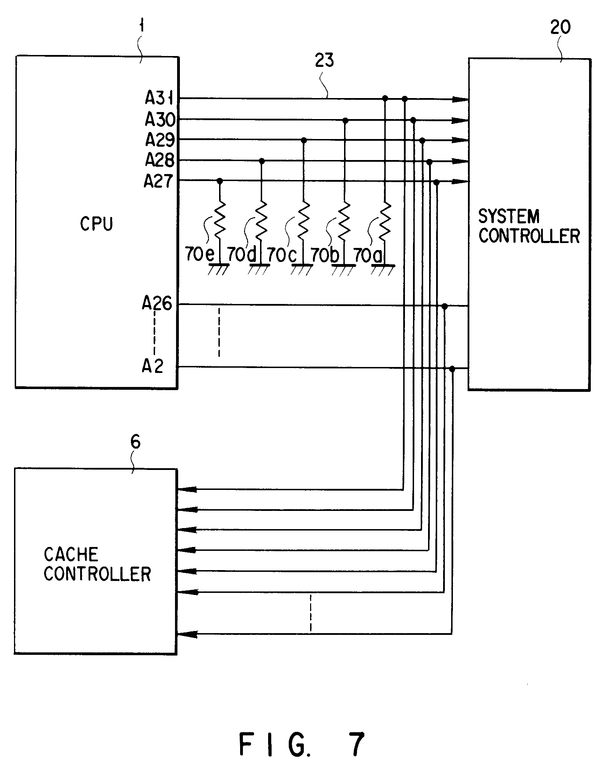

In this case, of those address data corresponding to the 32-bit addresses A31-A2 output from CPU 1, address data corresponding to the upper addresses A31-A27 are not employed as will be seen from Fig. 7. The address bus 23 corresponding to the addresses A31-A2 is connected between CPU 1 and the system controller 20 and between CPU 1 and cache controller 6.

When CPU 1 gets access to the system memory with the address data which has been output, as a signal designating an area exceeding the address space of the system memory, out of CPU 1, the memory controller of the system controller 20 causes a "wraparound" phenomenon. That is, when CPU 1 delivers address data including unavailable upper addresses A31-A27, the memory controller stores write data in system memory at an address determined irrespective of the upper addresses A31-A27 of the system memory.

The address output from CPU 1 is also supplied to the cache controller 6 via the address bus 23. Upon write access gained by CPU 1, the cache controller 6 stores an address output from CPU 1, as the corresponding write data, into cache memory 5. Thus not only addresses including those upper addresses A31-A27 not present in the system memory, but also data, are stored in cache memory 5. For this reason, the data updated by the system memory, as well as the storage content corresponding to its address, is stored in cache memory 5. Thus a noncoincidence occurs between the storage content of the system memory and that of the cache memory 5.

According to the system of the present invention, those lines of the address bus 23, or those address output terminals of CPU 1, corresponding to those upper addresses A31-A27 not used by CPU 1 are grounded, respectively, via resistors 70a-70e, as shown in Fig. 7, in accordance with the specification of the system.

In the arrangement shown, since the upper addresses A31-A27 not used by CPU 1 are normally set to a logic level "0" state, it is possible to prevent a situation in which the address data including the upper addresses A31-A27 are delivered as outputs. In the case where the address output terminals corresponding to the upper addresses A31-A27 accessible by CPU 1 are placed in an open state, the same situation as that in which an output is produced as the address data, including the upper addresses A31-A27, may occur due to noises involved and, in this sense, is inappropriate. The reason that the resistors 70a-70e are provided is because it is possible to prevent a damage to FET's (field effect transistors) connected to the address output terminals of CPU 1.

Since it is possible to prevent an output from being produced from the address data including the upper addresses A31-A27, a noncoincidence between the storage content of the system memory and that of the cache memory 5 can be positively prevented.

## Claims

1. A computer system comprising:
main memory means (3) having a first data storage area (3C) and write-protected second data storage area (3A, 3B) read/write-accessible by a CPU (1) of the system; and
cache memory means (5) for storing data involved when CPU makes read access to the main memory means (3) and valid bits for indicating that the stored data can be read-accessed or updated;
characterized by further comprising:
memory control means (4) for, when CPU (1) gains write access to the main memory means (3), determining whether or not a coincidence occurs between that access address and a corresponding address in the second data storage area and for, when a coincidence occurs, generating a flush signal (FS) which both inhibits write access to the second data storage area and makes invalidates access to all storage data in the cache memory means or invalidates a data update; and
cache memory control means (6) for controlling read/write access to the cache memory means (5) and for, on the basis of the flush signal generated from the memory control means (4), clearing all the valid bits (VB) stored in the cache memory means.

2. A system according to claim 1, characterized in that said memory control means (4) uses the second data storage area (3A, 3B) as a ROM storage area for storing data in a ROM in the system and, when the CPU makes read access to the ROM (30), reads that access item data out of the second data storage area (3A, 3B).

3. A system according to claim 1, characterized in that when the CPU (1) makes read access to the second data storage area (3A, 3B) in the main memory means (3) the cache memory control means (6) transfers access item data which is stored in the cache memory means (5) to the CPU and, when that access item data is not stored in the cache memory means, stores the access item data which is read out of the second data storage area in the cache memory means (5).

4. A system according to claim 1, characterized in that the memory control means (4) has a logic circuit (40) for outputting the flush signal and, when the CPU makes write access to the second data storage area in the main memory means, the logic circuit outputs the flush signal (FS) on the basis of a write control signal and an access address which is output from the CPU.

5. A computer system including a CPU (1) outputting given N bit address data and accessible to a memory address space defined by the N bit address data, comprising:
address data bus means (23) for transferring the N bit address data which is output from the CPU;
main memory means (4), having an address space defined by M bit address data smaller in its bit number than the N bit address data output from the CPU (1), for storing data read/write-accessible by the CPU;
cache memory means (5) for storing the data involved when the CPU (1) makes read access to the main memory means (4);
memory control means (4), responsive to the M bit address data output from the CPU via the address data bus means (23), for executing read/write control of the main memory means (4) in accordance with read/write access made by the CPU; and
cache memory control means (6), responsive to the M bit address data output from the CPU via the address data bus means, for controlling read/write access to the cache memory means (5),
characterized by further comprising:
means for invalidating address data which is transferred via those (N-M) bit bus lines determined by eliminating, from among those bus lines corresponding to an upper bit number of the N bit address data, those bus lines corresponding to the number of bits of the M bit address data.

6. A system according to claim 5, characterized in that the means for invalidating address data comprises means for fixedly grounding the (N-M) bit bus lines.

7. A system according to claim 6, characterized in that the (N-M) bit bus lines are fixedly grounded via corresponding resistors (70a-70e).
